# EUROPÄISCHE PATENTSCHRIFT

(11) **EP 0 639 444 B1**
(45) Veröffentlichungstag und Bekanntmachung des Hinweises auf die Patenterteilung: **09.10.1996**
(21) Anmeldenummer: 94106313.3
(22) Anmeldetag: 22.04.1994
(51) Int. Cl.: B29C 45/50

(54) **Einspritzaggregat**
Injection unit
Unité d'injection

(30) Priorität: 18.08.1993 DE 4327710
(43) Veröffentlichungstag der Anmeldung: 22.02.1995
(73) Patentinhaber: Ferromatik Milacron Maschinenbau GmbH, D-79364 Malterdingen (DE)
(72) Erfinder: Thoma, Herbert, Dipl.-Ing., D-79341 Kenzingen (DE); Keitel, Ralph, Dipl.-Ing., D-79206 Breisach (DE); Stillhard, Bruno, CH-9011 St. Gallen (CH)
(74) Vertreter: Röther, Peter, Dipl.-Phys.

(56) Entgegenhaltungen:
- EP-A- 0 447 570
- EP-A- 0 451 294
- DE-A- 1 577 225
- PATENT ABSTRACTS OF JAPAN vol. 15, no. 443 (M-1178) 12. November 1991 & JP-A-03 189 122 (FANUC)

## Beschreibung

Die Erfindung betrifft ein Einspritzaggregat für Spritzgießmaschinen mit einem Plastifizierzylinder mit einer darin rotierbar und durch einen Kurbelantrieb axial verschiebbar angeordnete Plastifizier- und Einspritzschnecke, wobei der Kurbelantrieb in einem Bereich von > 0° und < 180° zwischen seinen beiden Totpunkten hin- und herbewegbar ist.

Aus dem Stand der Technik (beispielsweise EP-A-0 451 294) ist ein derartiges Einspritzaggregat, dessen Schnecke durch einen Kurbelantrieb axial verschiebbar ist, bekannt.

Es handelt sich bei diesem Kurbelantrieb um einen zweiarmigen Kurbeltrieb, der von einem Elektromotor über ein zwischengeschaltetes Getriebe angetrieben wird. Der Kurbeltrieb übertragt die Rotationsbewegung des Motors in die Axialbewegung der Einspritzschnecke. Die Charakteristik des bekannten Kurbeltriebes zeigt, daß er dort eine große Kraft liefert, wo sie auch gebraucht wird. In der Phase des Einspritzvorganges, in der der plastifizierte Kunststoff hochverdichtet wird, liefert der Kurbeltrieb die notwenigen Kraftreserven. Mit dem Kraftprofil entlang des Einspritzweges ändert sich auch das Geschwindigkeitsprofil. Es ist grundsätzlich möglich, den Geschwindigkeitsverlauf direkt über den Elektromotor (AC-Servo-Motor) positiv zu beeinflussen. Das hat natürlich dann auch Auswirkungen auf den Kraftverlauf.

Wichtig ist in jedem Fall, daß bei der Betätigung des Kurbeltriebs beide Totpunkte, in denen die Kraft undefiniert ist, ausgespart bleiben, damit die an sich relativ geringe Leistungsdichte des Elektromotors (im Gegensatz zu bisher üblichen Hydraulikantrieben) optimal übersetzt werden kann. Damit ist ein derariger Kurbeltrieb optimal an die Erfordernisse des Einspritzens angepaßt, nämlich einerseits durch seine Geometrie und andererseits mittels der oben zitierten Geschwindigkeitsregelung. Der Verlauf der Kraft über dem Drehwinkel ist genau auf den eigentlichen Einspritzvorgang zugeschnitten.

Bei der Umsetzung der Rotationsbewegung des Elektromtors bzw. des Getriebes in die Axialbewegung der Schnecke wirken jedoch beim bekannten Kurbelantrieb auf die Schnecke bzw. auf die Lager, in denen die Schnecke geführt ist, Querkräfte, die zum Verschleiß an den beweglichen Elementen und/oder ausgeschlagenen Lagern führen.

Daher ist dieser Bereich besonders wartungsintensiv, und es kann rasch zu reparaturbedingten Ausfällen kommen, wodurch zwangsläufig die Produktion unterbrochen wird.

Um den vorzubeugen, sind beim vorbekannten Antrieb aufwendige Holmführungen notwendig, auf denen eine durch den Kurbelantrieb bewegte Platte läuft.

Daher liegt der Erfindung die Aufgabe zugrunde, ein Einspritzaggregat der eingangs genannten Art so auszubilden, daß eine exakte, querkräftefreie Axialbewegung der Einspritz- und Plastifizierschnecke ermöglicht wird.

Die Erfindung löst diese Aufgabe mit Helfe der Merkmale des kennzeichnenden Teils des Anspruchs 1, nämlich dadurch, daß der Kurbelantrieb aus zwei in einer gemeinsamen horizontalen Ebene arbeitenden Kurbeltrieben besteht, die spiegelbildlich zueinander angeordnet sind, wobei einer der Kurbeltriebe mit einem Servomotor über ein Getriebe verbunden ist und zur symmetrischen Bewegung der beiden Kurbeltriebe Synchronisationselemente vorgesehen.

Es ist zwar aus der DE-A-1 577 225 bereits ein Doppelkurbelantrieb bekannt, der spiegelsymmetrisch ausgebildet ist, der jedoch zum Antrieb des Stößels einer Verformungspresse dient. Der Antrieb wird hier zu dem Zweck eingesetzt, den Stößel mit einer besonders großen Kraft auf das zu verformende Blech zu pressen. Daß es bei diesem vorbekannten Antrieb nicht auf querkräftefreies Arbeiten ankommt, geht aus der Tatsache hervor, daß der Stößel in seitlichen Führungen geführt ist. Zusätzlich wird bei diesem vorbekannten Antrieb eine Zahnstange benötigt, die zur exakten Umsteuerung beim Bewegungsablauf des Stößels dienen soll.

Durch die spiegelbildliche Anordnung zweier gleich aufgebauter Kurbeltriebe, die zusammen den Kurbelantrieb bilden, und die völlig synchrone Bewegung dieser Kurbeltriebe heben sich die auf die Schnecke wirkenden Normalkräfte gegenseitig auf. Die wirksamen Kraftkomponenten liegen daher exakt in der Richtung der Axialbewegung der Schnecke. Der Verschleiß an den relativ zueinander bewegten Teilen ist somit minimal, wodurch es möglich ist, das oder die Lager, in dem bzw. denen die Schnecke läuft, relativ einfach aufzubauen, was um einen kostengünstig bei der Herstellung ist, aber auch wartungsfreundlich im Einsatz.

Dieser Vorteil kommt auch dem zweiten Merkmal des Anspruchs 1 zu, da lediglich ein einziger Antrieb für beide Kurbeltriebe vorgesehen ist.

Statt den Kurbelantrieb direkt am Schaft der Plastifizier- und Einspritzschnecke angreifen zu lassen, ist es auch möglich, den Kurbelantrieb an einem axial verschiebbaren Gehäuse angreifen zu lassen, in dem sich der Rotationsantrieb der Schnecke befindet, so daß beim Verschieben des Gehäuses die Schnecke zusammen mit ihrem Rotationsantrieb verschoben wird.

Ein besonders einfaches Beispiel zur Synchronisation der Bewegungen der beiden Kurbeltriebe ist durch das Merkmal des Anspruchs 2 gegeben. Als Synchronisationselemente sind zwei miteinnander kämmende Zahnräder vorgesehen, von denen jeweils eines drehfest auf der Antriebswelle der jeweiligen Kurbel angeordnet ist.

Für den Antrieb der beider Kurbeltriebe kann ein Planetengetriebe oder ein vergleichbares Getriebe vorgesehen sein. Hiermit lassen sich auf geringstem Raum sehr hohe Übersetzungen realisieren.

Prinzipiell ist es möglich, das Getriebe direkt über die Abtriebswelle mit der Welle der Drehachse der Kurbel zu verbinden, wie es in Anspruch 3 vorgeschlagen ist.

Eine alternative Ausführungsform ist durch den Anspruch 4 gegeben, der vorschlägt, daß auf der Abtriebswelle des Getriebes ein Ritzel angeordnet ist, das mit dem an der Kurbel angeordneten Zahnrad kämmt.

Zur Einstellung und Variation der Bewegungscharakteristik und damit des Kraft- und Geschwindigkeitsprofils schlägt der Anspruch 5 vor, daß der Kurbelantrieb antriebsseitig, d.h. Elektromotor und Getriebe, auf einer Zwangsführung relativ zum Plastifizierzylinder verschiebbar und arretierbar ist.

Dabei kann die Verschiebung durch einen eigenen elektrischen Antrieb erfolgen.

Die Erfindung wird im folgenden anhand von Zeichnungen dargestellt und näher erläutert.

Es zeigen:
- Fig. 1:: eine Spritzgießmaschine in Seitenansicht mit dem erfindungsgemäßen Schneckenantrieb,
- Fig. 2:: Spritzgießmaschine entsprechend Fig. 1 mit dem erfindungsgemäßen Schneckenantrieb in einer zweiten Ausführungsform,
- Fig. 3:: Spritzgießmaschine entsprechend Fig. 1 und 2 mit dem erfindungsgemäßen Schneckenantrieb in einer weiteren Ausführungsform,
- Fig. 4:: Spritzgießmaschine entsprechend Fig. 1 mit dem erfindungsgemäßen Schneckenantrieb in einer vierten Ausführungsform und
- Fig. 5:: einen erfindungsgemäßen Schneckenantrieb in Draufsicht in Ausgangs- und Endstellung.

In den Figuren sind gleiche Teile mit den gleichen Bezugszeichen bezeichnet.

Auf einem Maschinenrahmen 1 sind eine feststehende Formaufspannplatte 2 und eine feststehende Ständerplatte 3 angeordnet, zwischen denen vier Holme 4 - es sind nur die beiden vorderen Holme sichtbar - angeordnet sind. Sie führen die verschiebbare Formaufspannplatte 5, wobei zwischen dieser Formaufspannplatte 5 und der Ständerplatte 3 bzw. in der Ständerplatte 3 die mit 6 bezeichnete Schließeinheit zum Öffnen und Schließen der zweigeteilten Spritzgießform 7 angeordnet ist.

Die eine Formhälfte 8 der zweigeteilten Spritzgießform ist auf der verschiebbaren Formaufspannplatte 5 und die andere Formhälfte 9 auf der feststehenden Formaufspannplatte 2 lösbar befestigt.

Die Schließeinheit 6 ist von an sich bekannter konventioneller Bauart.

Die Formhälften 8 und 9 begrenzen in der Schließstellung der Spritzgießform 7 das Formnest 10, in das die Angußbohrung 11 der auf die feststehende Formaufspannplatte aufgespannten Formhälfte 9 mündet. Hierfür befindet sich in der feststehenden Formaufspannplatte ein Durchbruch 12. In diesen Durchbruch taucht der Plastifizier- und Einspritzzylinder 13 der Plastifizier- und Einspritzeinheit 14 ein und steht mit seinem vorderen Endabschnitt gegen die Formhälfte 9 bündig an.

Die Plastifizier- und Einspritzeinheit ist auf einem Schlitten 15 des nicht näher dargestellten Maschinenbettes des Maschinenrahmens 1 verschiebbar (Linearführung) angeordnet. In dem Plastifizier- und Einspritzzylinder ist die Plastifizier- und Einspritzschnecke 16 axial verschiebbar und rotierbar angeordnet. Ihr Schaft 17 ist mit der Abtriebswelle 17 des Antriebsgehäuses 18, welches den Rotationsantrieb der Plastifizier- und Einspritzschnecke bildet, gekuppelt. Der im Antriebsgehäuse 18 angeordnete elektrische Rotationsantrieb 19 für die Rotation der Schnecke steht mit seinem Abtriebsritzel 20 mit einem auf der Abtriebswelle des Antriebsgehäuses der Plastifizier- und Einspritzschnecke aufgezogenen Zahnrad 21 in Eingriff. Das Antriebsgehäuse 18 ist auf einer auf dem Schlitten 15 befestigten Linearführung 22 in Achsenrichtung der Plastifizier- und Einspritzschnecke frei verschiebar angeordnet.

Das Antriebsgehäuse weist auf seiner von der Plastifizier- und Einspritzschnecke abgewandten Seite eine Lasche 23 auf, an die mittels der Bolzen 24, 24' zwei zweiarmige Kurbeltriebe 25, 25', von denen nur der vordere dargestellt ist, mit ihrem jeweils einen Arm 26, 26' angelenkt sind, wobei einer der jeweils anderen Arme 27, 27' über eine Kupplung 29 mit der Abtriebswelle 30 eines Getriebes 31 kuppelbar ist. Die beiden Arme 26, 26' und 27, 27' sind jeweils mittels eines Bolzen 28, 28' aneinander angelenkt.

Der Servo-Motor 32 bildet den Antrieb für das Getriebe 31.

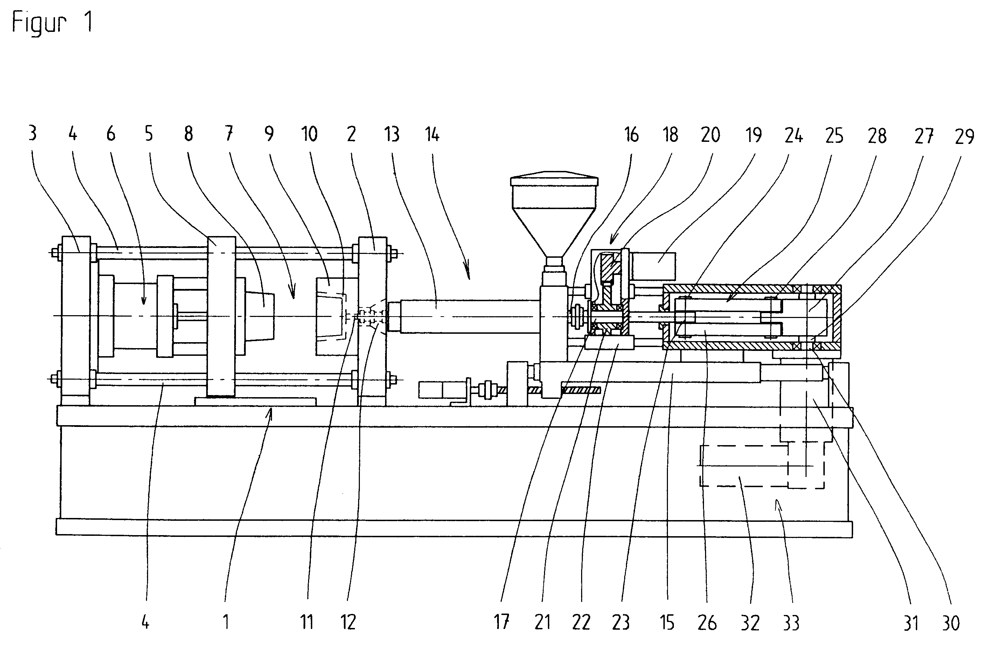

Während des Plastifizierens treibt der Antrieb 19 die Plastifizier- und Einspritzschnecke an, die das plastifizierte Material vor ihre Schneckenspitze fördert und gleichzeitig eine axiale Bewegung - bezogen auf Fig. 1 - nach rechts vollführt. Hierbei wird das Antriebsgehäuse 18 auf einer Führung 22 nach rechts mitgenommen. Diese Bewegung des Antriebsgehäuses wird über den Antrieb 33 vollzogen. Es kommt dabei zu einer Verstellung der Arme 26, 26' und 27, 27' der Kurbeltriebe 25, 25' in eine definierte Stellung, die nach Beendigung des Plastifizierens die Ausgangsstelle der Kurbeltriebe zu Beginn der Spritzphase ist.

Nach Beendigung des Plastifizierens bewegt der Antrieb 33 die Plastifizier- und Einspritzschnecke in ihre zur Spritzgießform benachbarte Endstellung.

Aufgrund der Ausgangsstelle der Kurbeltriebe 25, 25', der Länge der Kurbelarme zueinander und ihres von ihnen eingeschlossenen Winkels zu Beginn des Einspritzens, wird ein vorgegebener Spritzdruckverlauf auf die einzuspritzende Masse eingehalten. Durch die besonderen Eigenschaften der Kurbeltriebe können gegen Ende der Spritzphase beliebig kleine axiale Verschiebungen von der Schnecke durchgeführt werden, wobei auch sehr hohe Nachdrücke möglich sind, unter welchen der beim Abkühlen eines Spritzgußteils auftretende Schwund durch weitere Zufuhr von geringen Mengen an plastifiziertem thermoplastischen Material kompensiert wird.

Um beliebige Spritzdrücke in Abhängigkeit der Zeit bzw. der Stellung der Plastifizier- und Einspritzschnecke aufzubringen, kann die Winkellage der Kurbelarme zu Beginn der Einspritzphase verändert werden. Dies erfolgt z.B. durch eine Verschiebung und Arretierung des Antriebss 33 auf dem Schitten 15, durch Änderung der Länge der Kurbelarme bzw. durch Auswechseln der Kurbelarme gegen andere. Schließlich kann auch die Geschwindigkeit der Abtriebswelle des Servomotors geändert werden, so daß in einem weiten Bereich vorgegebene Scharen von Druckverläufen ohne weiteres realisierbar sind.

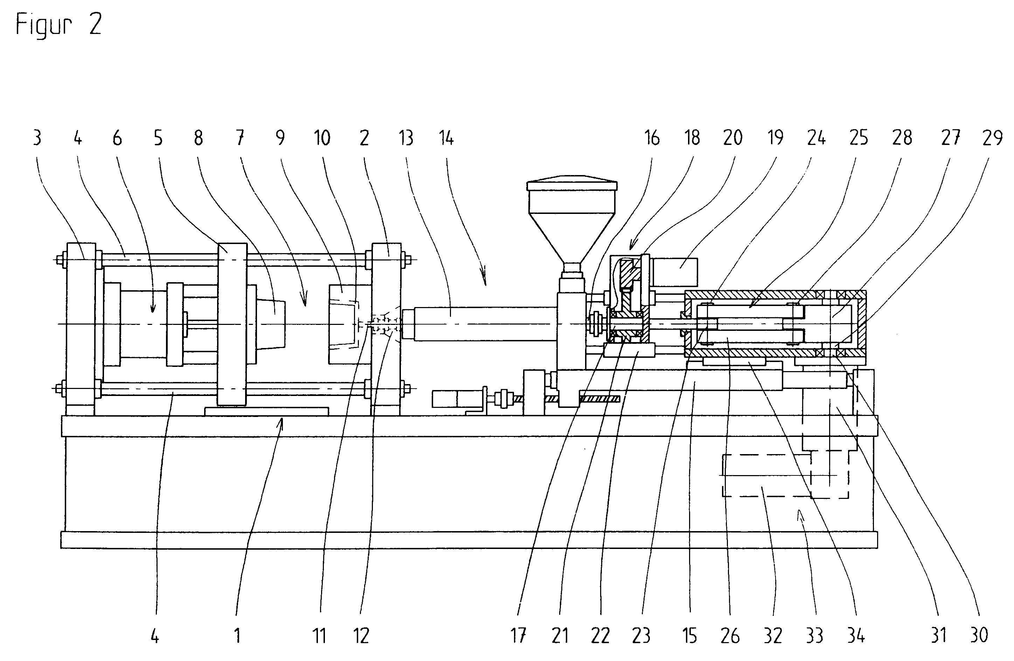

Die Fig. 2 zeigt eine Abwandlung dieses Ausführungsbeispiels in der Weise, daß das Antrieb (Kurbeltrieb) 33 auf einer Führung 34 angeordnet ist. Die Führung weist eine feststehende Skala (nicht dargestellt) auf, so daß der Antrieb 33 in definierte Positionen zur Realisierung vorgegebener Spritzdruckverläufe gebracht und arretiert werden kann.

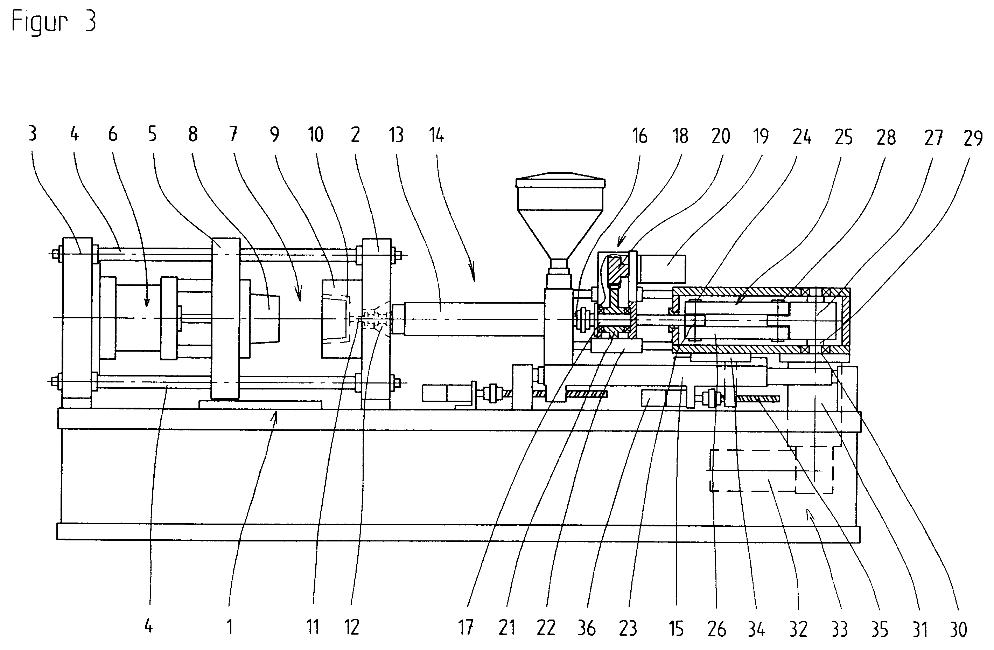

Die Fig. 3 zeigt eine Abwandlung des in Fig. 2 dargestellten Ausführungsprinzips. In Fig. 3 ist der Antrieb 33 auf der Linearführung 34 freiverschiebbar angeordnet und mit der Spindel 35 eines Spindelantriebs 36 gekuppelt. Dieser Spindelantrieb 36 weist ein nicht dargestelltes Steuerteil auf, in dem in Abhängigkeit der zu realisierenden Spritzdruckverläufe die Positionen des Antriebes 33 auf der Linearführung 34 gespeichert sind. In an sich bekannter Weise sind auf einem nicht dargestellten Bildschirm diese einander zugeordneten Arbeitspositionen und Spritzdruckverläufe zur Anzeige gebracht und der jeweils realisierte Spritzdruck z.B. in einer bestimmten Farbe dargestellt.

Anstelle des Spindelantriebs kann auch ein Zahnstangenantrieb eingesetzt werden.

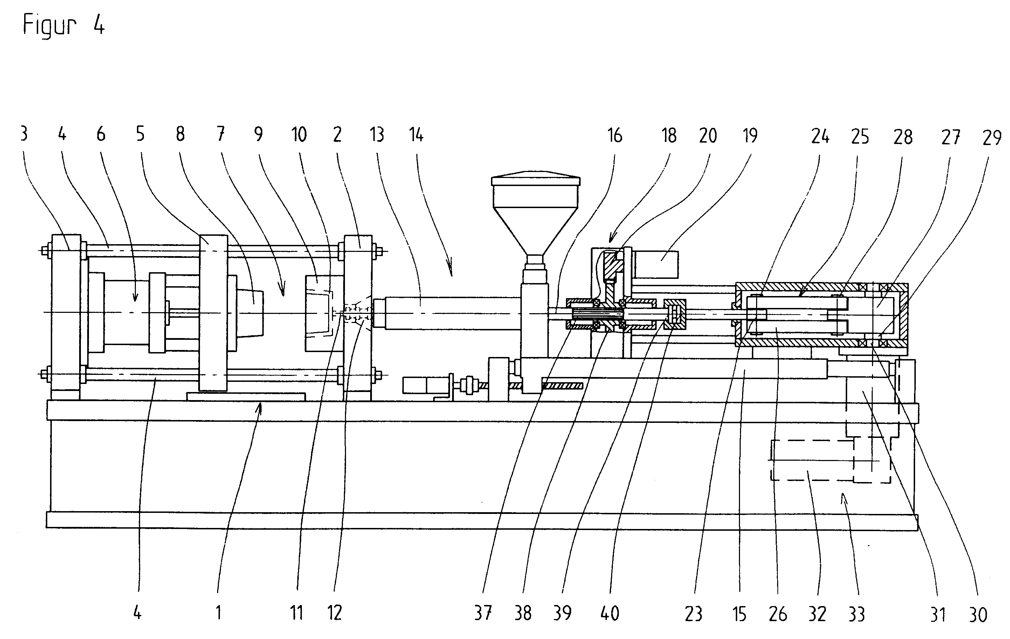

Fig. 4 zeigt ein weiteres Ausführungsbeispiel. Hierbei ist der Endabschnitt des Schaftes der Plastifizier- und Einspritzschnecke als Vielkeilwelle 37 ausgebildet und in dem Antriebsgehäuse 18 des Rotationsantriebs 19 über eine Länge axial verschiebbar angeordnet, die dem Hub der Plastifizier- und Einspritzschnecke während des Plastifizierens entspricht. Das Antriebsgehäuse 18 steht fest und die Plastifizier- und Einspritzschnecke ist verschiebbar angeordnet. In dem Antriebsgehäuse steht das Abtriebsritzel 20 des Antriebs 19 für die Rotation der Plastifizier- und Einspritzschnecke mit dem Ritzel 38 in Eingriff, das mit der Vielkeilwelle 37 in Eingriff steht.

Die Stirnseite 39 des Schartendes der Plastifizier- und Einspritzschnecke dient als Anschlag, mit dem die Plastifizier- und Einspritzschnecke nach Beendigung des Plastifizierens gegen die Stirnfläche (den Grund) der in das Lagergehäuse eingearbeiteten Sacklochbohrung 40 ansteht.

Mit Beginn der Spritzphase schieben die Kurbeltriebe 25, 25' die Plastifizier- und Einspritzschnecke, deren Stirnseite 39 gegen die Stirnfläche der Sacklochbohrung ansteht, in Richtung zur feststehenden Formaufspannplatte, bis die Plastifizier- und Einspritzschnecke ihre zur Spritzgießform benachbarte Endposition erreicht hat.

Anschließend werden die Kurbeltriebe 25, 25' auf Richtungsumkehr umgeschaltet. Der Unterschied zu den Ausführungsbeispielen nach den Fig. 1 bis 3 besteht darin, daß die Plastifizier- und Einspritzschnecke bewegt wird und das Getriebe feststeht.

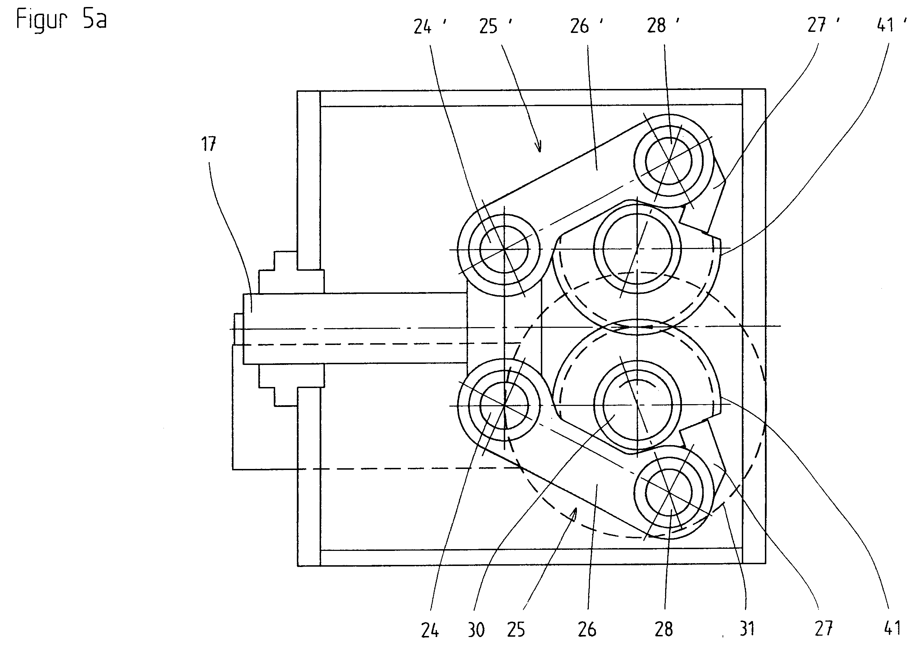

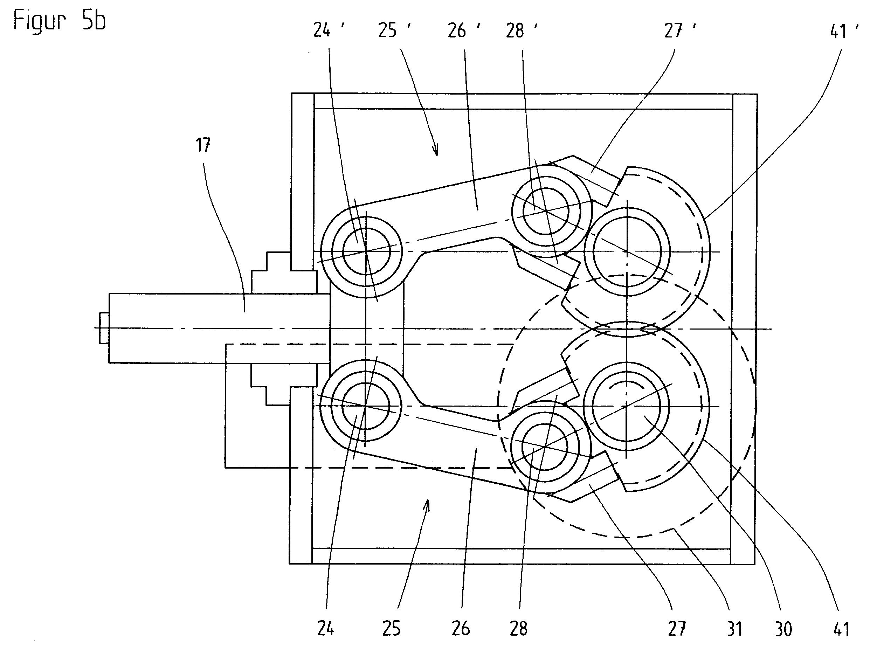

In den Fig. 5a und 5b sind die spiegelbildlich angeordneten Kurbeltriebe 25 und 25' in ihren jeweiligen Extremstellungen dargestellt. Die Fig. 5a zeigt die Stellung der Kurbeltriebe, wenn der Plastifiziervorgang beendet ist und mit dem Einspritzen begonnen werden kann, während die Fig. 5b die Kurbeltriebe in ihrer Stellung darstellt, in der der Einspritzvorgang abgeschlossen ist. Wie aus den Fig. 5a und 5b hervorgeht, ist lediglich der Kurbeltrieb 25 mit einem Antrieb 33 versehen. Zur Synchronisierung der Bewegungsabläufe beider Kurbeltriebe 25 und 25' sind zwei Zahnränder 41 und 41' vorgesehen, die jeweils auf den Wellen der Kurbeln 27 und 27' sitzen und miteinander kämmen.

## Patentansprüche

1. Einspritzaggregat für Spritzgießmaschinen mit einem Plastifizierzylinder (13) mit einer darin rotierbar und durch einen Kurbelantrieb (25,25') axial verschiebbar angeordnete Plastifizier- und Einspritzschnecke (16), wobei der Kurbelantrieb (25,25') in einem Bereich von > 0° und < 180° zwischen seinen beiden Totpunkten hin- und herbewegbar ist,
dadurch gekennzeichnet,
daß der Kurbelantrieb aus zwei in einer gemeinsamen horizontalen Ebene arbeitenden Kurbeltrieben (25,25') besteht, die spiegelbildlich zueinander angeordnet sind, wobei einer der Kurbeltriebe (25) mit einem Servomotor (31) über ein Getriebe verbunden ist und zur symmetrischen Bewegung der beiden Kurbeltriebe (25, 25') Synchronisationselemente (41,41') vorgesehen sind.

2. Einspritzaggregat nach Anspruch 1,
dadurch gekennzeichnet,
daß als Synchronisationselemente zwei miteinander kämmende Zahnräder (41,41') vorgesehen sind, von denen jeweils eines drehfest auf der Antriebswelle (30) der jeweiligen Kurbel (27,27') angeordnet ist.

3. Einspritzaggregat nach Anspruch 1 und 2,
dadurch gekennzeichnet,
daß die Abtriebswelle des Getriebes gleichzeitig die Antriebswelle (30) der Kurbel (27) ist.

4. Einspritzaggregat nach einem der Ansprüche 1 bis 3,
dadurch gekennzeichnet,
daß auf der Abtriebswelle des Getriebes ein Ritzel angeordnet ist, das mit dem an der Kurbel (27) angeordneten Zahnrad (41) kämmt.

5. Einspritzaggregat nach einem der Ansprüche 1 bis 4,
dadurch gekennzeichnet,
daß der Kurbelantrieb (25,25') antriebsseitig auf einer Zwangsführung (34) relativ zum Plastifizierzylinder (13) verschiebbar und arretierbar ist.

## Claims

1. An injection unit for injection moulding machines, having a plasticizing cylinder (13) with a plasticizing and injection screw (16) which is arranged rotatably therein and such that it is axially displaceable by a crank drive (25, 25'), the crank drive (25, 25') being movable to and fro between its two dead centre points in a range of > 0° and < 180°, characterized in that the crank drive comprises two crank gears (25, 25') which operate in a common horizontal plane and are arranged with mirror symmetry with respect to one another, one of the crank gears (25) being connected to a servomotor (31) by way of a gear mechanism, and synchronization elements (41, 41') being provided for the symmetrical movement of the two crank gears (25, 25').

2. An injection unit according to Claim 1, characterized in that there are provided as the synchronization elements two mutually meshing toothed wheels (41, 41'), of which in each case one is arranged non-rotatably on the drive shaft (30) of the respective crank (27, 27').

3. An injection unit according to Claims 1 and 2, characterized in that the driven shaft of the gear mechanism is at the same time the drive shaft (30) of the crank (27).

4. An injection unit according to one of Claims 1 to 3, characterized in that a pinion which meshes with the toothed wheel (41) arranged on the crank (27) is arranged on the driven shaft of the gear mechanism.

5. An injection unit according to one of Claims 1 to 4, characterized in that the crank drive (25, 25') is displaceable and lockable on the drive side on a restricted guidance means (34) relative to the plasticizing cylinder (13).

## Revendications

1. Groupe d'injection destiné aux presses d'injection comprenant un cylindre de plastification (13) muni à l'intérieur d'une vis sans fin d'injection et de plastification (16) disposée de manière à être amenée en rotation et à être déplacée axialement par l'intermédiaire d'une commande à manivelle (25, 25'), la commande à manivelle (25, 25') étant susceptible d'effectuer, entre ses deux points morts, un mouvement de va-et-vient dans une zone comprise entre > 0° et < 180°, caractérisé en ce que la commande à manivelle se compose de deux mécanismes à manivelle (25, 25') qui fonctionnent dans un plan horizontal commun et qui sont disposés en image de miroir l'un par rapport à l'autre, l'un des mécanismes à manivelle (25) étant relié à un servomoteur (31) par l'intermédiaire d'un engrenage et des éléments de synchronisation (41, 41') étant prévus pour assurer le mouvement symétrique des deux mécanismes à manivelle (25, 25').

2. Groupe d'injection selon la revendication 1, caractérisé en ce qu'il est prévu, en tant qu'éléments de synchronisation, deux roues dentées (41, 41') engrenées l'une dans l'autre, dont chacune est disposée solidaire en rotation sur l'arbre menant (30) de la manivelle respective (27, 27').

3. Groupe d'injection selon les revendications 1 et 2, caractérisé en ce que l'arbre mené de l'engrenage est en même temps l'arbre menant (30) de la manivelle (27).

4. Groupe d'injection selon l'une des revendications 1 à 3, caractérisé en ce qu'un pignon, qui est disposé sur l'arbre mené de l'engrenage, s'engrène avec la roue dentée (41) disposée sur la manivelle (27).

5. Groupe d'injection selon l'une des revendications 1 à 4, caractérisé en ce que la commande à manivelle (25, 25') peut être déplacée et bloquée, du côté de l'entraînement, sur un guidage forcé (34) par rapport au cylindre de plastification (13).
